Europäisches Patentamt

European Patent Office

Office européen des brevets

(11) Publication number: **0 505 770 A1**

# EUROPEAN PATENT APPLICATION

(21) Application number: **92103621.6**

(22) Date of filing: **03.03.92**

(51) Int. Cl.⁵: **B29C 67/22**, B29C 61/06, B29C 61/08

(30) Priority: **04.03.91 JP 38347/91 U**

(43) Date of publication of application:
**30.09.92 Bulletin 92/40**

(84) Designated Contracting States:
**DE FR GB IT**

(71) Applicant: **SUMITOMO ELECTRIC INDUSTRIES, LTD.**
**5-33, Kitahama 4-chome, Chuo-ku**
**Osaka-shi, Osaka 541(JP)**

(72) Inventor: **Kakihara, Takashi, c/o Kumatori Works**
**Sumitomo Electric Industries Ltd., 950, Oaza Noda**
**Kumatori-cho, Sennan-gun, Osaka(JP)**
Inventor: **Azuma, Shuji, c/o Kumatori Works**
**Sumitomo Electric Industries Ltd., 950, Oaza Noda**
**Kumatori-cho, Sennan-gun, Osaka(JP)**

(74) Representative: **Patentanwälte Grünecker, Kinkeldey, Stockmair & Partner**
**Maximilianstrasse 58**
**W-8000 München 22(DE)**

(54) Heat-shrinkable foam tubing with inner liner.

(57) A heat-shrinkable foam tubing with an inner liner, the combination of which is capable of joining a foam tubing to the surface of an article such as a pipe, a rod or the like readily and firmly. The tube has a double-layer construction comprising an outer heat-shrinkable foam layer (1) and an inner hot-melt resin layer (2). The tubing is composed primary of ethylene vinyl-acetate copolymer and polyamide. The tube can be shrunk and adhesively attached using one heating procedure.

FIG. 1

EP 0 505 770 A1

## BACKGROUND OF THE INVENTION

The present invention relates to a heat shrinkable foam tubing with an inner liner, the combination of which is capable of readily and firmly joining a foam tubing to the surface of an article such as a pipe, a rod or the like.

Articles such as pipes and rods having a complicated configuration are often covered with foam layers by using a shrinkable foam tubing such as disclosed by Japanese Patent Laid-Open No. 229614/1989.

However, to use the known shrinkable foam tubing described above it is necessary to apply an adhesive to the whole surface of a pipe or rod or to the foam tube before the pipe or rod and the foam tubing are joined together to lock the foam and the pipe or the rod firmly or to make the interface between the foam and the pipe or the rod waterproof. This process requires a great deal of time and effort.

In view of the foregoing, an object of this invention is to solve the above problems by providing a heat-shrinkable foam tube with an inner liner, the combination of which allows joining the foam to the surface of an object readily and firmly even when the object has a complicated configuration.

## SUMMARY OF THE INVENTION

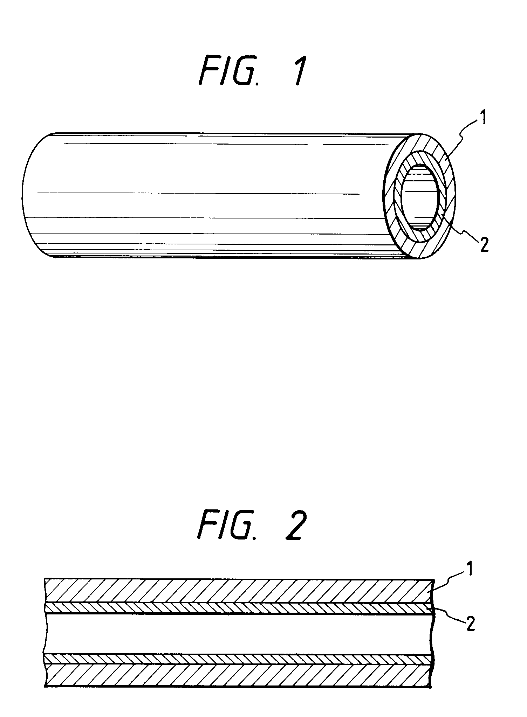

The present device is a heat-shrinkable foam tube with an inner liner, as shown in Figs. 1 and 2. The tubing is of double-layer construction having an outer heat-shrinkable foam layer 1 and an inner hot-melt adhesive layer 2.

After a heat shrinkable foam tubing according to the present invention is placed over an article such as a pipe, a rod or the like to be protected, the tube can be shrunk by heating.

When heated, the hot-melt inner layer melts and completely fills the interface between pipe or rod and the tube and joins both the foam tubing and the object to be protected by adhesive bonding. A heat-shrinkable foam tubing according to the present invention, makes it possible to quickly and simply cover and protect objects of complicated configurations.

## BRIEF DESCRIPTION OF THE DRAWINGS

Figure 1, a perspective view of a heat-shrinkable foam tubing with an inner liner according to the present invention.

Figure 2, a vertical sectional view of the heat-shrinkable foam tubing with an inner liner of Fig. 1.

## DETAILED DESCRIPTION OF THE PREFERRED EMBODIMENTS

Figure 1, a perspective view of a heat-shrinkable foam tubing with an inner liner according to the present invention.

Figure 2, a vertical sectional view of the heat-shrinkable foam tubing with an inner liner of Fig. 1.

Referenced numeral 1 refers to an outer heat-shrinkable foam layer and reference numeral 2 refers to an inner hot-melt layer.

The foam of the present device may have thermoplastic characteristics if a foaming thermoplastic resin is mixed with thermoplastic resin which can be cross-linked with the electron beem beforehand. In other words, the outer heat-shrinkable foam layer 1 can be made from almost any kind of thermoplastic resin foam.

The inner liner 2 may be made of any hot-melt resin, and may be selected in consideration of its adhesion properties with a particular object to be stuck.

Table 1 shows some materials that may be used for the outer jacket and the inner liner of the embodiment shown.

TABLE 1

| Outer layer material: | Ethylene vinyl-acetate copolymer (containing 25% vinyl-acetate) | 100 parts |
| | Calcium bicarbonate | 50 parts |
| | Lubricant | 1 part |
| | Zinc oxide | 1 part |
| | Foaming agent | 3 parts |
| Inner layer material: | Polyamide | 65 parts |
| | Denatured EVA | 35 parts |
| | Antioxidant | 2.5 parts |

Materials mixed together as shown in Table 1 were kneaded with rolls before being made into pellets by an extruder.

The outer and inner layer materials were co-extruded in the form of pellets by a double headed extruder at 100°C so as to avoid decomposition of a foaming agent. The pellets were formed into an extruded tube 15 mm in inner diameter with 0.3 mm in inner layer wall thickness and an outer layer wall thickness of 1.7 mm.

The extruded tube was irradiated with 4.7 Mrads of electron beam at 2.8 MeVA, 22 mA, to obtain an electron beam crosslinked tube having a gel distribution of about 40%.

Further, the tube was heated up to 210 °C to obtain a foam tube 25 mm in inner diameter having a wall thickness of 3 mm. While the tube was heated to a temperature higher than the polymer melting point, air was introduced into the tube and the space around it was evacuated to obtain a heat-shrinkable foam tube with an inner liner, having an inner diameter of 38 mm and a wall thickness of 1.8 mm.

The heat-shrinkable foam tube with inner liner thus obtained was placed over an aluminum pipe 2 m long and 32 mm in outer diameter and heated by means of a heat gun. As a result, the aluminum pipe was covered with a foam layer which formed an attractive uniform external appearance, was solidly adhered and firmly fixed to the pipe, was substantially free from water leakage and peeling, and offered good cushion protection.

Since the heat-shrinkable foam with an inner liner according to the present device has the hot-melt resin attached to its inner wall, the operation of applying an adhesive to the object to be protected or to the foam when the foam is locked to the object, can be dispensed with. Moreover, the foam can readily be coated and locked with an excellent external appearance even though the object to be protected has a complicated configuration. Therefore, workability, versatility and utility of the foam tube is improved.

**Claims**

1. A heat-shrinkable foam tubing with an inner liner of double-layer construction comprising:
   an outer heat-shrinkable foam layer; and
   an inner hot-melt resin layer.

2. A heat-shrinkable foam tubing of claim 1 wherein the outer foam layer comprises ethylene vinyl-acetate copolymer.

3. A heat-shrinkable foam tubing of claim 1 or 2 wherein the outer foam layer comprises one or more of the following: calcium bicarbonate; a lubricant; zinc oxide; a foaming agent.

4. A heat-shrinkable foam tubing of claim 1 wherein the inner resin layer comprises denatured ethylene vinyl-acetate.

5. A heat-shrinkable foam tubing of claim 1 or 4 wherein the inner resin layer comprises an antioxidant.

6. A heat-shrinkable foam tubing of claim 1 wherein the inner layer has a thickness of about 0.3mm.

7. A heat-shrinkable foam tubing of claim 1 wherein the outer layer has a thickness of about 1.7mm.

8. A method of manufacturing a heat shrinkable foam tube of double layer construction comprising the steps of:

mixing and kneading foam tube materials with rollers;
extruding the mixed materials into pellets;
forming the pellets into an extruded tube;
irradiating the extruded tube with an electron beam;
heating the tube; and
introducing air into the tube while evacuating the space surrounding the tube.

9. A method of manufacturing a heat shrinkable foam tubing of claim 8, wherein the step of mixing and kneading foam tube material with rollers is mixing and kneading ethylene vinyl-acetate copolymer and any of the following: calcium bicarbonate; lubricant, zinc oxide, foaming agent, to form the outer layer material.

10. A method of manufacturing a heat shrinkable foam tubing of claim 8, wherein the step of mixing and kneading foam tube materials with rollers is mixing and kneading denatured ethylene vinyl-acetate and anti-oxidant to form the inner layer material.

11. A method of manufacturing a heat shrinkable foam tubing of claim 8, wherein the step of extruding the mixed material into pellets is extruding the pellets with a double extruder at about 100°C.

12. A method of manufacturing a heat shrinkable foam tubing of claim 8, wherein the step of heating the tube is heating the tube to about 210°C.

13. A method of using a heat shrinkable foam tubing of double layer construction comprising the steps of:
placing the tubing over the object to be protected; and
heating the tube to shrink the tube and activate the adhesive resin.

## FIG. 1

## FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | WORLD PATENTS INDEX LATEST<br>Derwent Publications Ltd, London, GB<br>AN 78-52634A [29], DW 7829<br>& JP-A-53066986 (NITTO ELECTRICAL) 14 JUNE 1978<br>--- | 1-4,6,7,<br>13 | B29C67/22<br>B29C61/06<br>B29C61/08 |
| X | US-A-4 049 147 (C J STILES ET AL)<br>* column 2, line 39 - line 49 *<br>* column 3, line 63 - column 4, line 66 *<br>--- | 1,3,13 | |
| X | EP-A-0 233 516 (REHAU)<br>* page 3, line 12 - line 33 *<br>* page 5, line 15 - line 22; claim 7; figure 1 *<br>--- | 1 | |
| X | PATENT ABSTRACTS OF JAPAN<br>vol. 8, no. 284 (M-348)(1721) 26 December  1984<br>& JP-A-59 152 828 ( SUMITOMO KAGAKU KOGYO ) 31<br>August 1984<br>* abstract *<br>--- | 1 | |
| A | EP-A-0 200 824 (RAYCHEM)<br><br>* the whole document *<br>--- | 1,2,4,5,<br>8,10,11 | **TECHNICAL FIELDS SEARCHED (Int. Cl.5 )** |
| A | WORLD PATENTS INDEX<br>Derwent Publications Ltd, London, GB<br>AN 77-80060Y, AN 7745<br>& JP-A-52114667 (SUMITOMO ELEC)  26 SEPT 1977<br>--- | 1-3,8,9 | B29C |
| A | US-A-4 373 554 (P M COOK)<br>* column 5, line 58 - column 6, line 9 *<br>* column 6, line 9 *<br>--- | 5,8 | |
| A | WORLD PATENTS INDEX<br>Derwent Publications Ltd, London, GB<br>AN 75-41772W [25], DW7525<br>& JP-A-50012186 (SHOWA DENKO) 7 FEB 1975<br><br>----- | 4,10 | |

The present search report has been drawn up for all claims

| Place of search | Date of completion of the search | Examiner |
|---|---|---|
| THE HAGUE | 20 JULY 1992 | PHILPOTT G. R. |